# EUROPEAN PATENT APPLICATION

(11) **EP 4 704 200 A1**
(43) Date of publication of application: **04.03.2026**
(21) Application number: 25194104.3
(22) Date of filing: 05.08.2025
(51) Int. Cl.: H01M 10/04, H01M 50/105, H01M 50/178, H01M 50/184, H01M 50/186, H01M 50/30

(54) **METHOD OF MANUFACTURING BATTERY CELL AND BATTERY CELL**

(30) Priority: 28.08.2024 KR 20240115859
(71) Applicant: SK On Co., Ltd., Seoul 03161 (KR)
(72) Inventor: KIM, Byeong Chan, 34124 Daejeon (KR)
(74) Representative: Prüfer & Partner mbB Patentanwälte · Rechtsanwälte

(57) **Abstract**

A method of manufacturing a battery cell includes an edge sealing process of sealing at least a portion of an edge of a case to form an edge sealed portion blocking an electrode accommodation portion and a gas accommodation portion externally and a finishing sealing process of sealing a boundary portion crossing between the electrode accommodation portion and the gas accommodation portion in a first direction to form an exterior sealed portion, wherein the exterior sealed portion includes a first portion formed in a central region of the boundary portion and a second portion formed in an end region of the boundary portion, and in the finishing sealing process, an extension extending in a second direction toward the electrode accommodation portion is formed in the second portion of the exterior sealed portion.

## Description

### TECHNICAL FIELD

The present disclosure relates to a method of manufacturing a battery cell capable of electrical charging and discharging, and to a battery cell.

### BACKGROUND

Unlike primary batteries, secondary batteries (battery cells) have the convenience of being able to be charged with and discharged of electricity, and thus have come to prominence as a power source for various mobile devices, electric vehicles, energy storage systems, etc.

Secondary batteries may be manufactured as pouch-type battery cells or can-type battery cells. A pouch-type battery cell may have a structure in which an electrode assembly is accommodated inside a flexible pouch case. A can-type battery cell has a structure in which an electrode assembly is accommodated inside a rigid case and may include a cylindrical battery cell or a prismatic battery cell.

The case of the pouch-type battery cell includes an electrode accommodation portion accommodating an electrode assembly and a sealed portion arranged around the electrode accommodation portion and having a shape extending outwardly from the electrode accommodation portion. The sealed portion may be formed by thermally fusing (compressing) an internal layer of the case.

### SUMMARY

A battery cell case may include an electrode accommodation portion and a gas accommodation portion. A sealed portion may be formed on the edges of the electrode accommodation portion and the gas accommodation portion. A portion of the sealed portion may have a shape corresponding to the exterior of a finished battery cell product. For example, a sealed portion formed at a corner of the electrode accommodation portion may include a protrusion thicker than other portions.

Gas generated in the electrode accommodation portion may be discharged to the outside of the electrode accommodation portion through a degassing process. The protrusion formed in the sealed portion may be a factor in impeding the flow of gas during a process of moving gas from the electrode accommodation portion to the gas accommodation portion. In other words, due to the protrusion formed in the sealed portion, gas generated in the electrode accommodation portion may not be smoothly discharged or the flow of gas may not be smooth.

In addition, in order to reduce the volume of the battery cell, the sealed portion may be folded based on a folding line. After the process of folding the sealed portion, insulation failure or leakage may occur.

The present disclosure may be implemented in some embodiments to provide a method of manufacturing a battery cell and a battery cell, capable of easily discharging gas from an electrode accommodation portion to a gas accommodation portion.

The present disclosure may be implemented in some embodiments to provide a method of manufacturing a battery cell and a battery cell, capable of preventing damage to a sealed portion due to gas flow.

The present disclosure may be implemented in some embodiments to provide a method of manufacturing a battery cell and a battery cell, capable of preventing or reducing insulation failure of a sealed portion or leakage of electrolyte, gas, etc. from the sealed portion.

The battery cell of the present disclosure may be widely applied to devices within green technology fields, such as electric vehicles, battery charging stations, and solar power generation and wind power generation using batteries. In addition, the battery module and battery pack of the present disclosure may be used in eco-friendly electric vehicles and hybrid vehicles to prevent a climate change by suppressing air pollution and greenhouse gas emissions.

In some embodiments of the present disclosure, a method of manufacturing a battery cell includes: an edge sealing process of sealing at least a portion of an edge of a case to form an edge sealed portion blocking an electrode accommodation portion and a gas accommodation portion externally; and a finishing sealing process of sealing a boundary portion crossing between the electrode accommodation portion and the gas accommodation portion in a first direction to form an exterior sealed portion, wherein the exterior sealed portion includes a first portion formed in a central region of the boundary portion and a second portion formed in an end region of the boundary portion, and in the finishing sealing process, an extension extending in a second direction toward the electrode accommodation portion is formed in the second portion of the exterior sealed portion.

The extension may include a diagonal line forming a chamfer shape at a corner of the electrode accommodation portion.

The edge sealed portion may include an overlapping portion overlapping the exterior sealed portion, and the overlapping portion may have a shape not protruding toward the central region of the boundary portion, as compared to the periphery of the overlapping portion.

The edge sealing process may include a process of forming a first edge sealed portion formed on a lateral side of the electrode accommodation portion and the gas accommodation portion and extending in the second direction, and a process of forming a second edge sealed portion formed on a top side of the gas accommodation portion and extending in the first direction, and the overlapping portion may be formed in a portion in which the first edge sealed portion and the exterior sealed portion intersect.

The edge sealed portion may include an overlapping portion overlapping the exterior sealed portion, and the overlapping portion may have a shape in which a boundary line facing the central region of the boundary portion may be perpendicular to the first direction.

The method may further include: a transverse portion sealing process performed between the edge sealing process and the finishing sealing process, during the transverse portion sealing process, the boundary portion may be at least partially sealed in the first direction to form a transverse sealed portion.

The transverse sealed portion may be formed with a constant width in the second direction.

The method may further include: a cutting process of cutting the boundary portion along a cutting line to correspond to an appearance of the battery cell, the cutting process may be being performed after the finishing sealing process; and a folding process of folding a sealed portion disposed around the electrode accommodation portion, wherein the folding process includes a process of folding the sealed portion based on a folding line, and the folding line is located in the exterior sealed portion and is disposed in a position outside the transverse sealed portion.

The cutting line may be set to have a slope (inclination) with respect to the exterior sealed portion so that the folding line does not pass through a region in which the edge sealed portion and the exterior sealed portion overlap at both ends of the folding line.

The method may further include: a degassing process of discharging gas generated in the electrode accommodation portion from the electrode accommodation portion to the gas accommodation portion, the degassing process being performed between the edge sealing process and the finishing sealing process.

In some embodiments of the present disclosure, a battery cell includes: an electrode assembly; a cell case including an electrode accommodation portion accommodating the electrode assembly and an electrolyte and a sealed portion sealing at least a portion of a circumference of the electrode accommodation portion; and an electrode lead electrically connected to the electrode assembly and exposed in a first direction through a lateral side of the electrode accommodation portion, wherein the sealed portion includes an edge sealed portion formed on a lateral side of the electrode accommodation portion in which the electrode lead may be disposed and an exterior sealed portion formed on a top side of the electrode accommodation portion in which the electrode lead may be not disposed, the exterior sealed portion includes a first portion formed in a central region and a second portion formed in an end region, and the second portion of the exterior sealed portion includes an extension extending in a second direction toward the electrode accommodation portion.

The extension may include a diagonal line forming a chamfer shape at a corner of the electrode accommodation portion.

The edge sealed portion may include an overlapping portion overlapping the exterior sealed portion, and the overlapping portion may have a shape not protruding toward the central region of the exterior sealed portion, as compared to the periphery of the overlapping portion.

The edge sealed portion may include an overlapping portion overlapping the exterior sealed portion, and a boundary line of the overlapping portion facing the first portion of the exterior sealed portion may have a shape perpendicular to the first direction.

The sealed portion may be formed on three open sides among four sides located around the electrode accommodation portion, the edge sealed portion may be formed on each of both lateral sides of the electrode accommodation portion, and the electrode lead may be disposed on each of both lateral sides of the electrode accommodation portion.

The exterior sealed portion may be folded based on a folding line extending in the first direction to form a folded portion, and the folding line may be configured not to pass through a region in which the edge sealed portion and the exterior sealed portion overlap.

According to an embodiment of the present disclosure, in the degassing process, gas may be easily discharged from the electrode accommodation portion to the gas accommodation portion and the gas flow may be made smooth.

According to an embodiment of the present disclosure, in the degassing process, damage to the sealed portion due to the flow of gas may be prevented, and accordingly, insulation failure or leakage of electrolyte, gas, etc. of the sealed portion may be prevented or reduced.

According to an embodiment of the present disclosure, insulation failure or leakage of electrolyte, gas, etc. of the sealed portion due to the process of folding the sealed portion may be prevented or reduced.

### BRIEF DESCRIPTION OF DRAWINGS

Certain aspects, features, and advantages of the present disclosure are illustrated by the following detailed description with reference to the accompanying drawings.
FIG. 1 is a front view of a battery cell according to an embodiment.
FIG. 2 is a perspective view of a battery cell including a folded portion.
FIG. 3 is a flowchart illustrating a method of manufacturing a battery cell according to an embodiment.
FIGS. 4A to 4E are schematic diagrams sequentially illustrating a method of manufacturing a battery cell according to an embodiment.
FIGS. 5A to 5C are schematic diagrams illustrating an edge sealed portion formed in an edge sealing process according to an embodiment, a transverse sealed portion formed in a transverse portion sealing process according to an embodiment, and an exterior sealed portion formed in a finishing sealing process according to an embodiment, respectively.
FIG. 6 is a front view of a battery cell according to another embodiment.
FIGS. 7A to 7C are schematic diagrams sequentially illustrating a method of manufacturing a battery cell according to a comparative example.
FIGS. 8A to 8C are schematic diagrams illustrating an edge sealed portion formed in an edge sealing process according to a comparative example, a transverse sealed portion formed in a transverse portion sealing process according to a comparative example, and an exterior sealed portion formed in a finishing sealing process according to a comparative example, respectively.

### DETAILED DESCRIPTION

Hereinafter, the present disclosure will be described in detail with reference to the accompanying drawings. However, this is merely an example and the present disclosure is not limited to the specific embodiments described as examples.

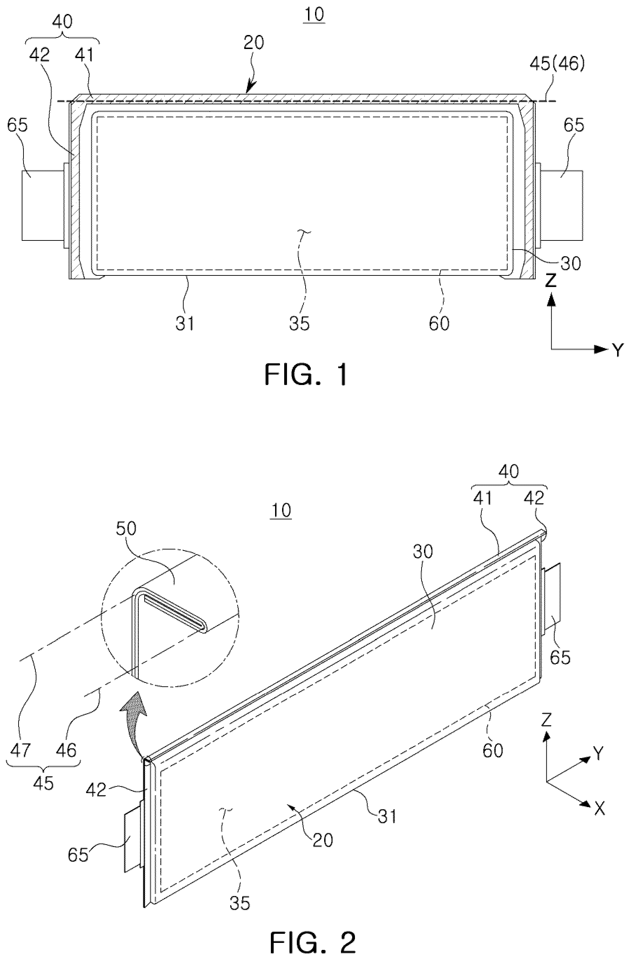

FIG. 1 is a front view of a battery cell according to an embodiment.

Referring to FIG. 1, a battery cell 10 may include a cell case 20 and an electrode assembly 60 accommodated inside the cell case 20. An electrode lead 65 connected to the electrode assembly 60 may be exposed to the outside of the cell case 20. The electrode assembly 60 may include a positive electrode plate, a negative electrode plate, and a separator. The separator may be disposed between the positive electrode plate and the negative electrode plate.

The cell case 20 may include an electrode accommodation portion 30 forming an electrode accommodation space 35 accommodating the electrode assembly 60 and a sealed portion 40 disposed around the electrode accommodation portion 30 and extending outwardly from the electrode accommodation portion 30. The sealed portion 40 may be thermally fused to protect the electrode assembly 60 from the outside.

The electrode lead 65 may include a positive electrode lead electrically connected to a plurality of positive electrode plates and a negative electrode lead electrically connected to a plurality of negative electrode plates. The electrode leads 65 may be arranged on opposite sides of the electrode assembly 60. For example, the positive electrode lead may be disposed on one side of the electrode assembly 60 and the negative electrode lead may be arranged on the other side of the electrode assembly 60. However, the arrangement position and number of the electrode leads 65 may be changed variably. For example, both the positive electrode lead and the negative electrode lead may be arranged on one side of the electrode assembly 60.

The sealed portion 40 may include a first sealed portion 41 in which the electrode lead 65 is not disposed and a second sealed portion 42 in which the electrode lead 65 is disposed. The first sealed portion 41 may be located on the upper side of the electrode assembly 60, and the second sealed portion 42 may be located on the lateral side of the electrode assembly 60.

When one cell case 20 is folded to form the electrode accommodation portion 30, the cell case 20 may have a shape in which three of the four sides of the electrode accommodation portion 30 are open and one side 31 is closed. The sealed portion 40 may be formed on the three open sides of the electrode accommodation portion 30.

The battery cell 10 according to an embodiment is not limited to a structure in which the sealed portion 40 is formed on three sides of the electrode accommodation portion 30. For example, the battery cell 10 may also have a configuration in which the electrode accommodation portion 30 is formed by overlapping two cell cases 20. In this case, the sealed portion 40 may be formed on all four sides of the electrode accommodation portion 30.

The sealed portion 40 may be folded to increase the joint reliability of a sealed portion and minimize the volume occupied by the sealed portion 40. The sealed portion 40 may be folded based on a folding line 45. The folding line 45 may be provided on the first sealed portion 41 in which the electrode lead 65 is not disposed. The sealed portion 40 may be folded based on a first folding line 46.

FIG. 2 is a perspective view of a battery cell including a folded portion. FIG. 2 illustrates a state in which the sealed portion 40 of the battery cell 10 illustrated in FIG. 1 is folded.

Referring to FIG. 2, the sealed portion 40 may include a first sealed portion 41 in which the electrode lead 65 is not disposed and the second sealed portion 42 in which the electrode lead 65 is disposed.

The first sealed portion 41 may be folded based on the folding line 45 to form a folded portion 50. The folded portion 50 may be folded based on the first folding line 46 and then further folded based on a second folding line 47. In FIG. 2, the folded portion 50 is illustrated as having a 270-degree folded shape, but the folded portion 50 may be folded at an angle greater than 270 degrees. In order to prevent the folded portion 50 from being easily unfolded due to a spring back phenomenon, the folded portion 50 may be attached to the electrode accommodation portion 30 using tape.

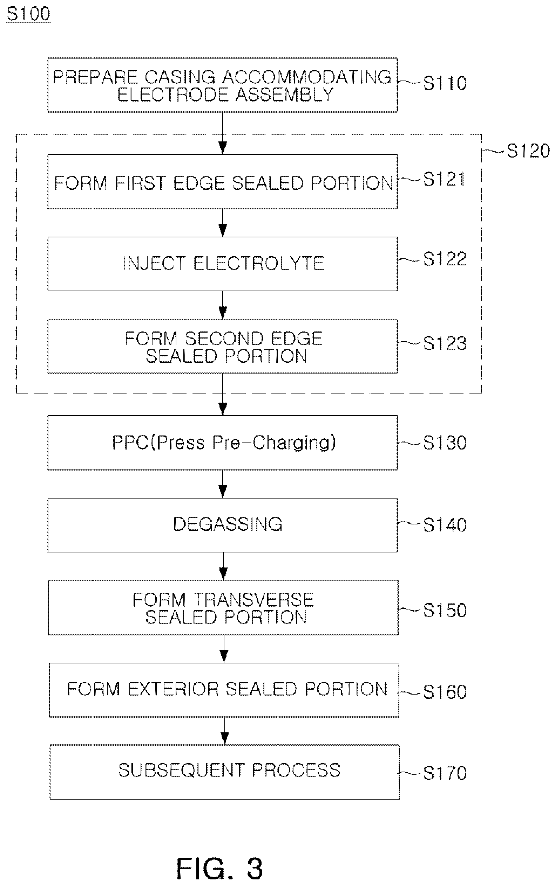

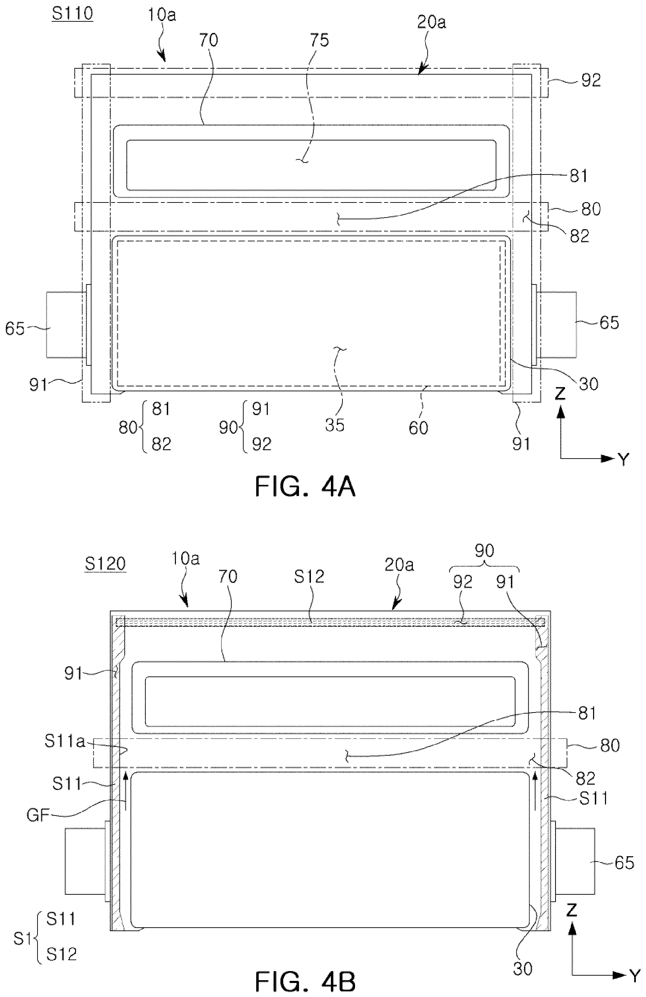

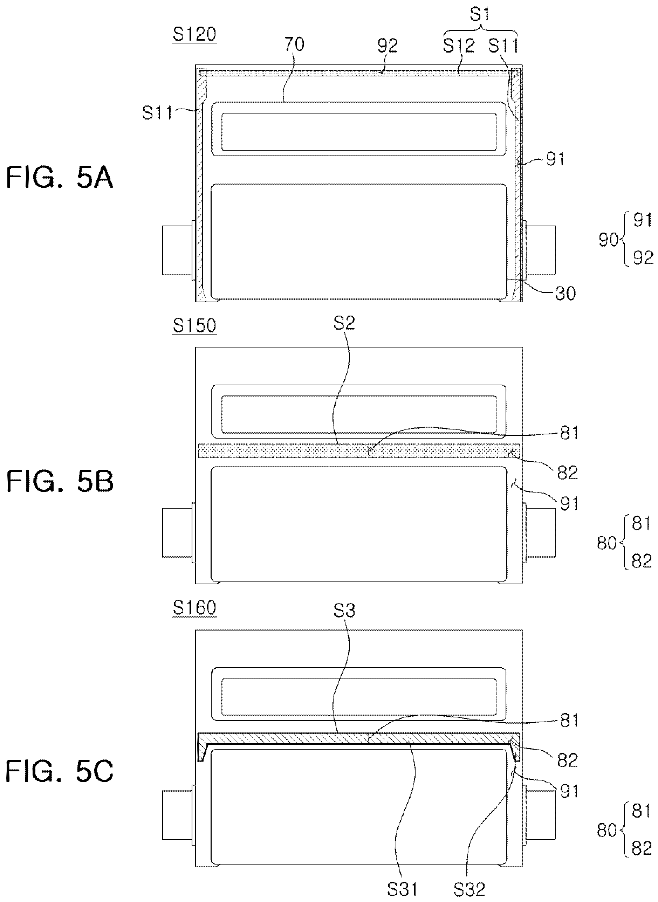

FIG. 3 is a flowchart illustrating a method of manufacturing a battery cell (S100) according to an embodiment. FIGS. 4A to 4E are schematic diagrams sequentially illustrating the method of manufacturing a battery cell (S100) according to an embodiment. FIGS. 5A to 5C are schematic diagrams illustrating an edge sealed portion S1 formed in an edge sealing process (S120) according to an embodiment, a transverse sealed portion S2 formed in a transverse portion sealing process (S150) according to an embodiment, and an exterior sealed portion S3 formed in a finishing sealing process (S160) according to an embodiment, respectively. FIGS. 5A to 5C illustrate each sealed portion separately in order to clearly illustrate the shapes of the edge sealed portion S1, the transverse sealed portion S2, and the exterior sealed portion S3, respectively.

The method of manufacturing a battery cell 10 (S100) according to an embodiment includes an edge sealing process (S120) and a finishing sealing process (S160). The method of manufacturing a battery cell 10 (S100) according to an embodiment may include a preparation process (S110), an edge sealing process (S120), and a finishing sealing process (S160). In addition, the method of manufacturing a battery cell (S100) according to an embodiment may additionally include at least some of an initial charging process (S130), a degassing process (S140), a transverse portion sealing process (S150), and a subsequent process (S170).

The battery cell 10 of the present disclosure described here is a pouch-type battery cell, but is not limited thereto.

### [Preparation process]

Referring to FIGS. 3 and 4A, the preparation process (S110) is a process of preparing the case 20a including the electrode accommodation portion 30 accommodating the electrode assembly 60 and the gas accommodation portion 70 accommodating gas generated in the electrode accommodation portion 30.

The case 20a may include the electrode accommodation portion 30 and the gas accommodation portion 70. Meanwhile, the cell case 20 illustrated in FIGS. 1 and 2 includes the electrode accommodation portion 30 and has a state in which the gas accommodation portion 70 is removed. In order to be distinguished from the cell case 20 illustrated in FIGS. 1 and 2, the configuration of an outer casing including the gas accommodation portion 70 is referred to as a `case 20a'. In addition, a battery cell 10a including the case 20a in which the gas accommodation portion 70 is formed is denoted by the reference numeral `10a' so as to be distinguished from the battery cell 10 illustrated in FIGS. 1 and 2.

The case 20a may be formed by folding a single outer casing in which spaces respectively corresponding to the electrode accommodation space 35 and the gas accommodation space 75 are formed. The electrode accommodation portion 30 may be located on the lower side of the case 20a, and the gas accommodation portion 70 may be located on the upper side of the case 20a. The gas accommodation portion 70 may be located on the upper side of the electrode accommodation portion 30. When forming the case 20a by folding a single outer casing, a lower surface of the electrode accommodation portion 30 may correspond to a surface on which the single outer casing is folded. In addition, both lateral sides of the case 20a and the top side of the case 20a may have an open shape. That is, when forming the case 20a by folding a single outer casing, three of the edges of the case 20a may have an open structure, and the three open edges may be sealed by the edge sealing process (S120).

However, the shape and structure of the case 20a may be changed variably. For example, the case 20a may be formed by overlapping two outer casings. In this case, four of the edges of the case 20a may have an open shape. The four open edges may be sealed by the edge sealing process (S120) described below.

An edge portion 90 of the case 20a may include a first edge 91 located on the lateral side of the electrode accommodation portion 30 and the gas accommodation portion 70 and a second edge 92 located on the top side of the gas accommodation portion 70. The first edge 91 may have a shape extending in a second direction (a -Z-axis), and the second edge 92 may have a shape extending in a first direction Y. The first edge 91 and the second edge 92 may intersect at a portion adjacent to the upper corner of the gas accommodation portion 70. The first direction (the Y-axis direction, hereinafter referred to as 'Y') is a direction crossing between the electrode accommodation portion 30 and the gas accommodation portion 70, and the second direction (opposite direction of the Z-axis, hereinafter referred to as '-Z') is a direction from the gas accommodation portion 70 toward the electrode accommodation portion 30 in a direction perpendicular to the first direction Y.

A boundary portion 80 may be formed between the electrode accommodation portion 30 and the gas accommodation portion 70. The boundary portion 80 is configured to traverse between the electrode accommodation portion 30 and the gas accommodation portion 70 in the first direction Y. The boundary portion 80 may include a central region 81 and an end region 82. The end region 82 of the boundary portion 80 is a region adjacent to the first edge 91, and the central region 81 of the boundary portion 80 is a region disposed between the end regions 82 on both sides.

The preparation process (S110) may include a process of disposing the electrode assembly 60 in the electrode accommodation space 35. The electrode assembly 60 may be disposed in the electrode accommodation space 35 with the electrode lead 65 coupled thereto. The electrode lead 65 may be exposed to the outside of the case 20a through the first edge 91. The electrode leads 65 may be coupled to one side and the other side of the electrode assembly 60, respectively. In this case, the electrode lead 65 may be exposed to the outside of the case 20a through the first edge 91 located on one side of the case 20a and the first edge 91 located on the other side of the case 20a. However, the arrangement position and number of the electrode leads 65 may be changed variably. For example, the electrode leads 65 may also be disposed on only one side of the electrode assembly 60.

### [Edge sealing process (S120)]

Referring to FIG. 3, FIG. 4B, and FIG. 5A, in the edge sealing process (S120), the edge sealed portion S1 sealing at least a portion of the edge of the case 20a to block the electrode accommodation portion 30 and the gas accommodation portion 70 from the outside may be formed. The edge sealed portion S1 may include a first edge sealed portion S11 and a second edge sealed portion S12.

The edge sealing process (S120) may include a process (S121) of forming the first edge sealed portion S11 and a process (S123) of forming the second edge sealed portion S12. The edge sealing process (S120) may additionally include an electrolyte injection process (S122). The electrolyte injection process (S122) may be performed between the process (S121) of forming the first edge sealed portion S11 and the process (S123) of forming the second edge sealed portion S12.

In the process (S121) of forming the first edge sealed portion S11, the first edge sealed portion S11 may be formed on the first edge 91 of the case 20a. The first edge sealed portion S11 is formed on the lateral side of the electrode accommodation portion 30 and the gas accommodation portion 70 and may extend in the second direction -Z. The first edge sealed portion S11 may be formed on both lateral sides of the electrode accommodation portion 30 and the gas accommodation portion 70. In a state in which the first edge sealed portion S11 is formed, the second edge 92 located on the upper side of the case 20a may be in an open state. In the first edge sealed portion S11, a width of a portion adjacent to the lower corner of the electrode accommodation portion 30 may be greater than those of the other portions. In addition, in the first edge sealed portion S11, a width of a portion adjacent to the upper corner of the gas accommodation portion 70 may be greater than those of the other portions. The portions adjacent to the lower corner and upper corner of the electrode accommodation portion 30 are portion in which the first edge sealed portion S11 starts, so the width of the sealing region may increase to increase sealing force compared to those of other portions.

The electrolyte injection process (S122) may be performed after the process (S121) of forming the first edge sealed portion S11. The electrolyte injection process (S122) may inject the electrolyte into the electrode accommodation portion 30 in which the electrode assembly 60 is accommodated through the open second edge 92.

The process (S123) of forming the second edge sealed portion S12 may form the second edge sealed portion S12 on the second edge 92 of the case 20a. The second edge sealed portion S12 may be formed on the top side of the gas accommodation portion 70 and may extend in the first direction Y. The process (S123) of forming the second edge sealed portion S12 may be performed after the electrolyte injection process (S122). Through the process (S123) of forming the second edge sealed portion S12, an internal space of the case 20a may be sealed from the outside.

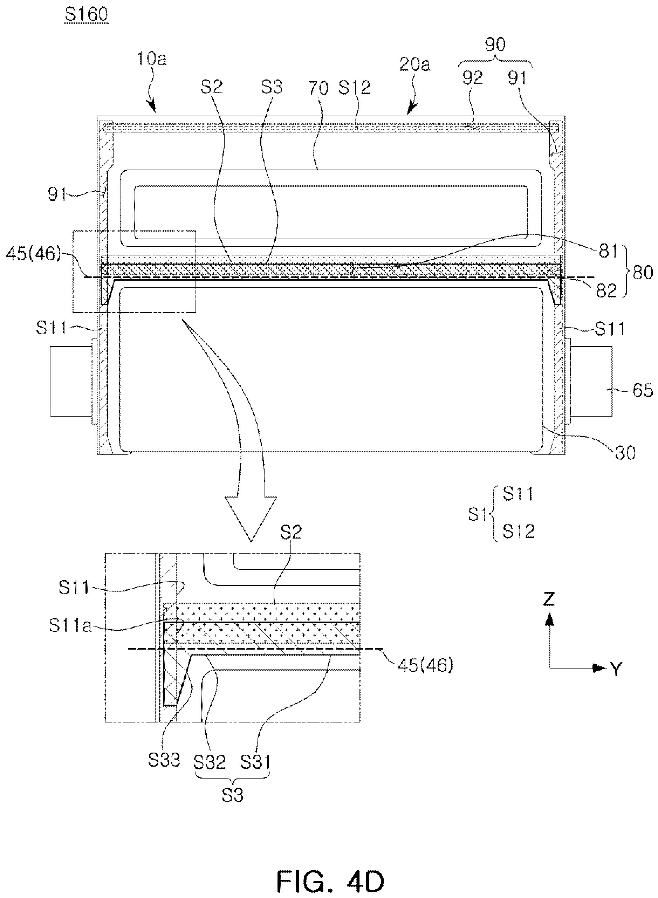

The edge sealed portion S1 may include an overlapping portion S11a overlapping the exterior sealed portion (S3 of FIG. 4D). The overlapping portion S11a may be disposed in the end region 82 of the boundary portion 80. The overlapping portion S11a may be provided in the first edge sealed portion S11 and may correspond to a portion in which the first edge sealed portion S11 and the end region 82 of the boundary portion 80 overlap. The overlapping portion S11a may be defined as a portion in which the edge sealed portion S1 and the exterior sealed portion (S3 of FIG. 4d) described below overlap. The overlapping portion S11a may be formed in a portion at which the first edge sealed portion S11 and the exterior sealed portion S3 intersect.

The overlapping portion S11a may have a shape not protruding toward the central region 81 of the boundary portion 80 compared to the periphery of the overlapping portion S11a. The overlapping portion S11a may have a flat shape in the second direction -Z. For example, the overlapping portion S11a may have a shape in which a boundary line facing the central region 81 of the boundary portion 80 (or a boundary line facing a first portion S31 of the exterior sealed portion S3 described below) is perpendicular to the first direction Y. Accordingly, in the degassing process (S140) described below, when gas flows from the electrode accommodation portion 30 to the gas accommodation portion 70 at a location adjacent to the first edge sealed portion S11, the gas may flow smoothly. In addition, according to an embodiment, when the gas flows in the degassing process (S140), the first edge sealed portion S11 may be prevented or limited from being damaged by the flowing gas.

### [Initial charging process (S130)]

The initial charging process (S130) may be performed after the edge sealing process (S120) is performed. In the initial charging process (S130), the battery cell 10a in which the electrolyte is accommodated may be charged to a constant capacity (for example, 20 to 30% of the total capacity). The initial charging process (S130) may include a press pre-charge (PPC) process of charging the battery cell 10a, while applying a preset pressure.

### [Degassing process (S140)]

The degassing process (S140) is a process of discharging gas generated in the electrode accommodation portion 30 of the battery cell 10a to the outside of the electrode accommodation portion 30. The degassing process (S140) may be performed after the initial charging process (S130). The degassing process (S140) may be performed between the edge sealing process (S120) and the finishing sealing process (S160) described below. The degassing process (S140) may be configured to discharge gas generated in the electrode accommodation portion 30 from the electrode accommodation portion 30 to the gas accommodation portion 70. In the degassing process (S140), the gas generated in the electrode accommodation portion 30 may flow to the gas accommodation portion 70. The gas generated in the electrode accommodation portion 30 may flow like a gas flow GF indicated by the arrows in FIG. 4B. Since the overlapping portion S11a of the first edge sealed portion S11 does not protrude toward the central region 81 of the boundary portion 80, as compared to the periphery of the overlapping portion S11a, the gas flow is not obstructed by the overlapping portion S11a of the first edge sealed portion S11. Therefore, according to an embodiment, the gas flow GF may be smoothly formed in the portion adjacent to the first edge sealed portion S11. In addition, the first edge sealed portion S11 may be prevented or limited from being damaged by the gas flow GF.

### [Transverse portion sealing process (S150)]

Referring to FIG. 3, FIG. 4C, and FIG. 5B, the transverse portion sealing process (S150) may be performed between the edge sealing process (S120) and the finishing sealing process (S160). In the transverse portion sealing process (S150), the transverse sealed portion S2 may be formed in the boundary portion 80 located between the electrode accommodation portion 30 and the gas accommodation portion 70. The transverse sealed portion S2 may be formed to have a constant width (or thickness) in the second direction -Z. Both ends of the transverse sealed portion S2 may overlap the first edge sealed portion S11. The transverse sealed portion S2 may overlap the overlapping portion S11a of the first edge sealed portion S11.

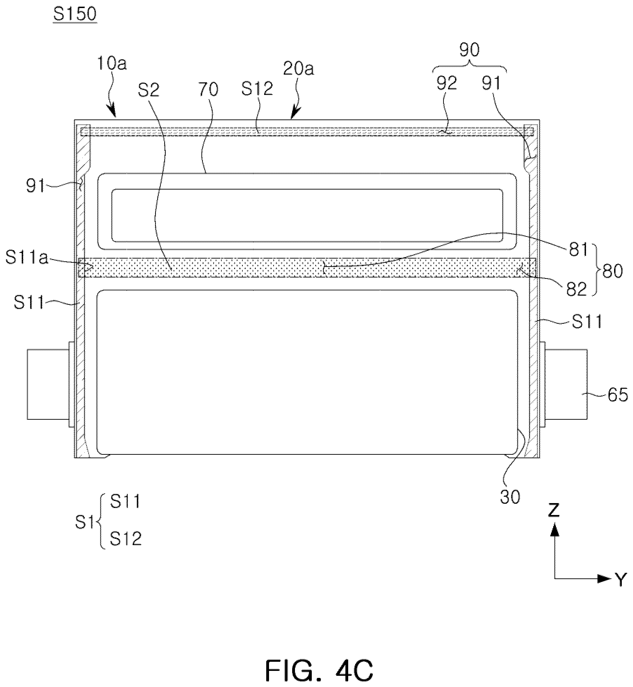

The transverse sealed portion S2 may be formed by at least partially sealing the boundary portion 80 in the first direction Y. Although FIG. 4C illustrates a shape in which the transverse sealed portion S2 is continuously formed along the boundary portion 80, the transverse sealed portion S2 may have a partially disconnected shape, that is, a discontinuous or intermittent shape. When the transverse sealed portion S2 has an intermittent shape, gas generated in the electrode accommodation portion 30 may move to the gas accommodation portion 70 in a subsequent aging process. As an example, the aging process may be performed between the process of forming the transverse sealed portion S2 and the process of forming the exterior sealed portion S3. However, the transverse portion sealing process (S150) is not necessarily performed, and it is also possible to perform the aging process or the process of forming the exterior sealed portion S3 without performing the process of forming the transverse sealed portion S2.

### [Finishing sealing process (S160)]

Referring to FIG. 3, FIG. 4D, and FIG. 5C, in the finishing sealing process (S160), the exterior sealed portion S3 may be formed. The exterior sealed portion S3 may be formed by sealing the boundary portion 80 crossing between the electrode accommodation portion 30 and the gas accommodation portion 70 in the first direction Y. A portion of the exterior sealed portion S3 may overlap the transverse sealed portion S2. The exterior sealed portion S3 may be formed in a location closer to the electrode accommodation portion 30 than the transverse sealed portion S2.

The exterior sealed portion S3 may include the first portion S31 formed in the central region 81 of the boundary portion 80 and a second portion S32 formed in the end region 82 of the boundary portion 80.

The finishing sealing process (S160) may include a process of forming an extension S33 in the second portion S32 of the exterior sealed portion S3. The extension S33 may extend in the second direction (a downward direction) (-Z) toward the electrode accommodation portion 30 from the second portion S32 of the exterior sealed portion S3.

The extension S33 may include a diagonal line forming a chamfer shape at the corner at which the edge sealed portion S1 and the exterior sealed portion S3 intersect. That is, based on the assumption that a chamfer is formed at the corner in which the edge sealed portion S1 and the exterior sealed portion S3 intersect, an inner boundary line of the extension S33 may correspond to the diagonal line forming the chamfer. As an example, the extension S33 may have a shape in which an outer boundary line thereof in the first direction Y is perpendicular to the first direction Y and the inner boundary line thereof in the first direction Y may have a slope (inclination) away from the electrode accommodation portion 30 downwardly.

Since the inner boundary line of the extension S33 is disposed to be adjacent to the electrode accommodation portion 30, the extension S33 may form a wide sealing region in a portion adjacent to the upper corner of the electrode accommodation portion 30 to increase sealing force of the electrode accommodation portion 30.

### [Subsequent process (S170)]

The subsequent process (S170) may be performed after the process of forming the exterior sealed portion S3. The subsequent process (S170) may include a cutting process and a folding process.

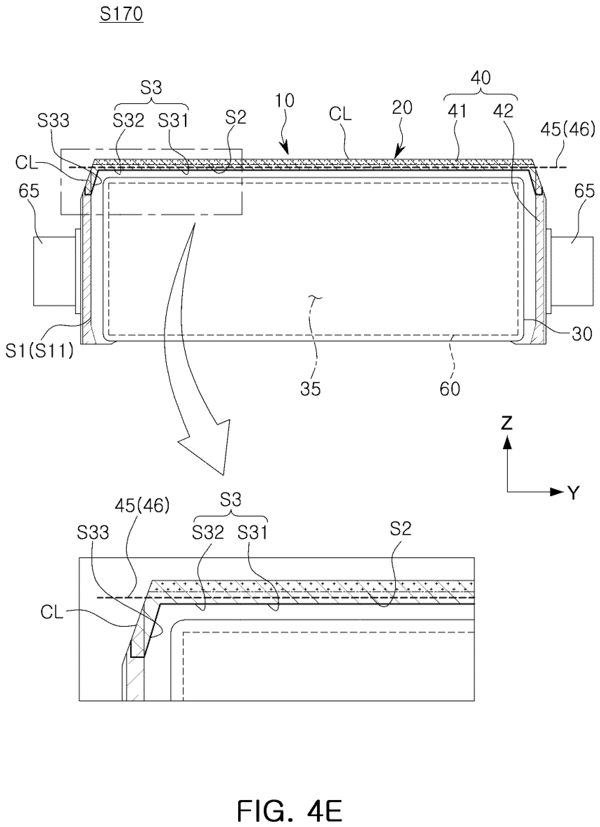

Referring to FIGS. 3 and 4E together with FIG. 4D, the cutting process may be performed after the finishing sealing process (S160), and in the cutting process, the boundary portion 80 may be cut along a cutting line CL to correspond to the appearance of the battery cell 10. The portion in which the gas accommodation portion 70 is formed may be separated from the case 20a by the cutting process. The cutting line CL may extend in the second direction -Z along the portion in which the transverse sealed portion S2 is formed. Both ends of the cutting line CL may be inclined.

The folding process is a process of folding the sealed portion 40 disposed around the electrode accommodation portion 30. The folding process may include a process of folding the sealed portion based on the folding line 45. In the folding process, the first sealed portion 41 may be folded based on the first folding line 46. The first sealed portion 41 may correspond to the exterior sealed portion S3 extending in the first direction Y. In the case of forming the transverse sealed portion S2, the first sealed portion 41 may correspond to the transverse sealed portion S2 and the exterior sealed portion S3. The second sealed portion 42 may correspond to the extended edge sealed portion S1. The folding line 45 may be positioned in the exterior sealed portion S3, but may be positioned outside the transverse sealed portion S2. However, the position of the folding line 45 is not limited thereto and may be changed according to the design specifications of the battery cell or process conditions.

Meanwhile, the cutting line CL may be set to have a slope with respect to the exterior sealed portion S3 so that the folding line 45 does not pass through a region in which the edge sealed portion S1 and the exterior sealed portion S3 overlap at both ends of the folding line 45. For example, the cutting line CL may have a slope (inclination) similar to the inner boundary line of the extension S33 at both ends.

In this manner, when the folding line 45 does not pass through the sealing region in which the edge sealed portion S1 and the exterior sealed portion S3 overlap, a phenomenon of the sealed portion 40 becoming vulnerable during the process of forming the folding line 45 may be prevented or limited. In other words, the occurrence of insulation failure in the folded sealed portion 40 may be prevented or reduced. In addition, the occurrence of leakage of electrolyte, gas, etc. due to a decrease in sealing force in the folded sealed portion 40 may be prevented or reduced.

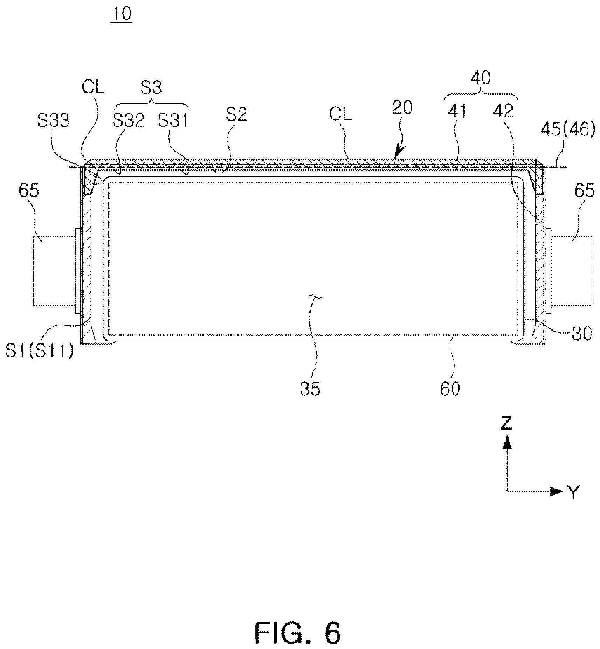

However, as described below with reference to FIG. 6, depending on the process conditions, the folding line 45 may be set to pass through a portion of the region in which the edge sealed portion S1 and the exterior sealed portion S3 overlap.

### [Battery cell 10]

Referring to FIG. 4E together with FIGS. 1, 2, and 4D, the battery cell 10 according to an embodiment may include the electrode assembly 60, the cell case 20, and the electrode lead 65.

The electrode lead 65 may be electrically connected to the electrode assembly 60 and may be exposed in the first direction Y through the lateral side of the electrode accommodation portion 30.

The cell case 20 may include the electrode accommodation portion 30 accommodating the electrode assembly 60 and an electrolyte and the sealed portion 40 sealing at least a portion of the circumference of the electrode accommodation portion 30. The sealed portion 40 may include the edge sealed portion S1 formed on the lateral side of the electrode accommodation portion 30 in which the electrode lead 65 is disposed and the exterior sealed portion S3 formed on the top side of the electrode accommodation portion 30 in which the electrode lead 65 is not disposed. The electrode lead 65 may not be disposed on the top side of the electrode accommodation portion 30. The edge sealed portion S1 may correspond to the second sealed portion 42, and the exterior sealed portion S3 may correspond to the first sealed portion 41.

The exterior sealed portion S3 may include the first portion S31 formed in the central region 81 and the second portion S32 formed in the end region 82. The second portion S32 of the exterior sealed portion S3 may include the extension S33 extending in the second direction -Z toward the electrode accommodation portion 30. The extension S33 may include a diagonal line forming a chamfer shape at the corner of the electrode accommodation portion 30.

The edge sealed portion S1 may include the overlapping portion S11a overlapping the exterior sealed portion S3. The overlapping portion S11a may have a shape not protruding toward the central region 81 of the exterior sealed portion S3, as compared to the periphery of the overlapping portion S11a. The overlapping portion S11a may have a shape in which a boundary line facing the first portion S31 of the exterior sealed portion S3 is perpendicular to the first direction Y.

The sealed portion may be formed on three open sides among the four sides located around the electrode accommodation portion 30. The edge sealed portion S1 may be formed on both lateral sides of the electrode accommodation portion 30, and the electrode leads 65 may be disposed on both lateral sides of the electrode accommodation portion 30.

The exterior sealed portion S3 may be folded based on the folding line 45 extending in the first direction Y to form the folded portion (50 in FIG. 2). The folding line 45 may be configured not to pass through the region in which the edge sealed portion S1 and the exterior sealed portion S3 overlap. The folded portion (50 in FIG. 2) may be folded based on the first folding line 46, and the first folding line 46 may be configured not to pass through the region in which the edge sealed portion S1 and the exterior sealed portion S3 overlap.

The descriptions given above with reference to FIG. 1 to FIG. 5C may be applied to the battery cell 10 illustrated in FIG. 4E.

FIG. 6 is a front view of the battery cell 10 according to another embodiment.

Compared to FIG. 4E, the battery cell 10 illustrated in FIG. 6 has a difference in the location of the cutting line CL. The cutting line CL of the battery cell 10 illustrated in FIG. 6 is configured to have a smaller chamfer size than the cutting line CL of the battery cell 10 illustrated in FIG. 4E. That is, the cutting line CL of the battery cell 10 illustrated in FIG. 6 is located farther from the electrode accommodation portion 30 than the cutting line CL of the battery cell 10 illustrated in FIG. 4E. In this case, the folding line 45 may pass through a portion of the region in which the edge sealed portion S1 and the exterior sealed portion S3 overlap.

In the embodiment of FIG. 6, the folding line 45 is located relatively far from the inner boundary line of the extension S33. That is, a point at which the folding line 45 intersects the overlapping sealing region may be disposed in a position spaced apart from the inner boundary line of the sealing region. Therefore, even if the sealing force is reduced at the point at which the folding line and the overlapping sealing region intersect, leakage may be prevented or reduced, as compared to a comparative example described below. In addition, since the size of the sealing region overlapping the folding line 45 is small, the possibility of insulation failure in the sealing region may also be reduced.

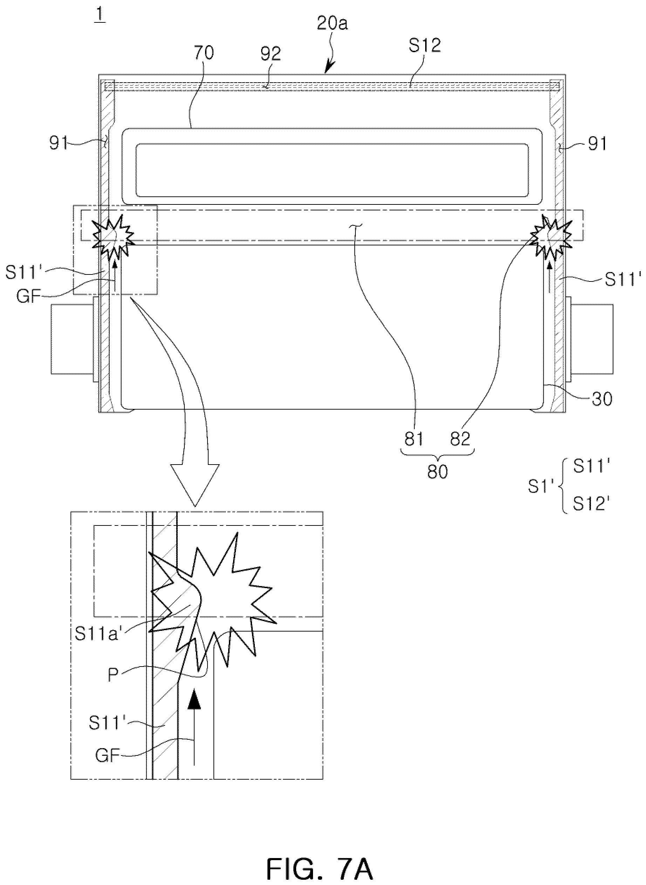

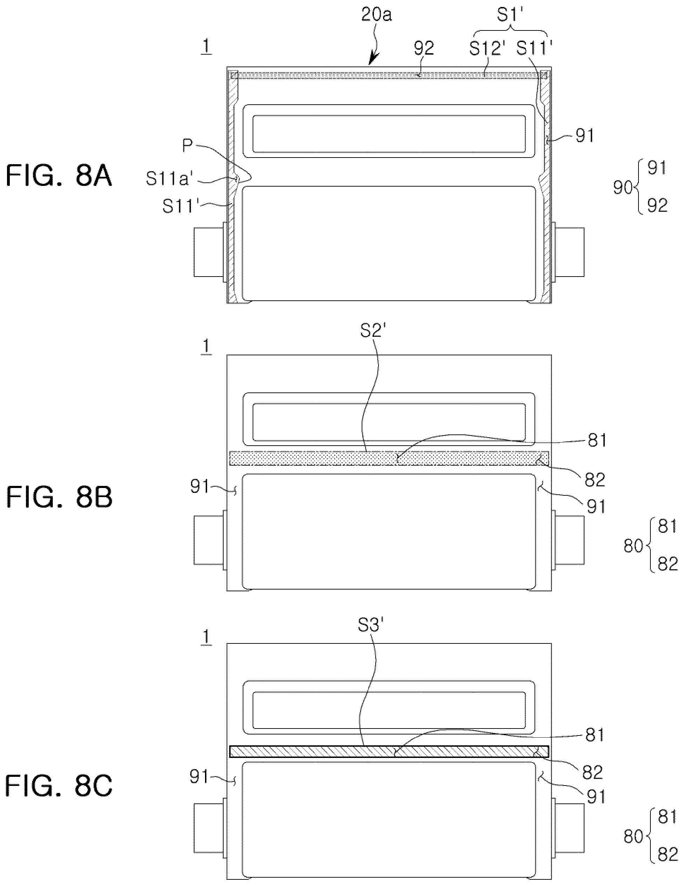

FIGS. 7A to 7C are schematic diagrams sequentially illustrating a method of manufacturing a battery cell 1 according to the comparative example. FIG. 8A to 8C are schematic diagrams illustrating an edge sealed portion S1' formed in an edge sealing process according to the comparative example, a transverse sealed portion S2' formed in a transverse portion sealing process according to the comparative example, and an exterior sealed portion S3' formed in a finishing sealing process according to the comparative example, respectively. FIG. 8A to 8C illustrate each sealed portion separately in order to clearly illustrate the shapes of the edge sealed portion S1', the transverse sealed portion S2', and the exterior sealed portion S3' according to the comparative example, respectively.

The comparative example is intended to be compared with the battery cell manufacturing method (S100) and the battery cell 10 according to the example of the present disclosure and is described based on the assumption that the shapes of the edge sealed portion S1' and the exterior sealed portion S3' are different from those of the example of the present disclosure and that the other components of the comparative example are substantially similar to those of the example of the present disclosure.

The case 20a of the battery cell 1 according to the comparative example may have the same shape as that of the case 20a illustrated in FIG. 4A.

As illustrated in FIG. 7A and FIG. 8A, in the edge sealing process according to the comparative example, the edge sealed portion S1' may be formed. The edge sealing process may include a process of forming a first edge sealed portion S11' and a process of forming a second edge sealed portion S12'.

The first edge sealed portion S11' may be formed on the first edge 91 of the case 20a. The first edge sealed portion S11' may be formed on the lateral side of the electrode accommodation portion 30 and the gas accommodation portion 70 and may extend in the second direction -Z. The first edge sealed portion S11' may be formed on both lateral sides of the electrode accommodation portion 30 and the gas accommodation portion 70.

The second edge sealed portion S12' may be formed on the second edge 92 of the case 20a. The second edge sealed portion S12' may be formed on the top side of the gas accommodation portion 70 and may extend in the first direction Y. The process of forming the second edge sealed portion S12' may be performed after the electrolyte injection process.

The edge sealed portion S1' may include an overlapping portion S11a' disposed at the end region 82 of the boundary portion 80. The overlapping portion S11a' is provided in the first edge sealed portion S11' and may correspond to a portion in which the first edge sealed portion S11' and the end region 82 of the boundary portion 80 overlap. The overlapping portion S11a' may include a protrusion P protruding toward the central region 81 of the boundary portion 80, as compared to the periphery. The protrusion P may serve to enlarge the sealing region so that the sealing force may be improved at the upper corner of the electrode accommodation portion 30.

However, as shown in FIG. 7A, the protrusion P of the comparative example may act as an obstacle obstructing the gas flow GF when the gas flows from the electrode accommodation portion 30 to the gas accommodation portion 70 at a location adjacent to the first edge sealed portion S11' in the degassing process. Therefore, in the case of the comparative example, the gas flow is not smooth in the degassing process. In addition, when the gas flows in the degassing process, gas may hit the protrusion P so the first edge sealed portion S11' may be damaged.

In contrast, in the example, the overlapping portion S11a of the first edge sealed portion S11 may not protrude toward the central region 81 of the boundary portion 80, as compared to the periphery of the overlapping portion S11a. Therefore, according to the example, the flow of gas may be smoothly achieved in the degassing process, and the first edge sealed portion S11 may be prevented or limited from being damaged by the flowing gas.

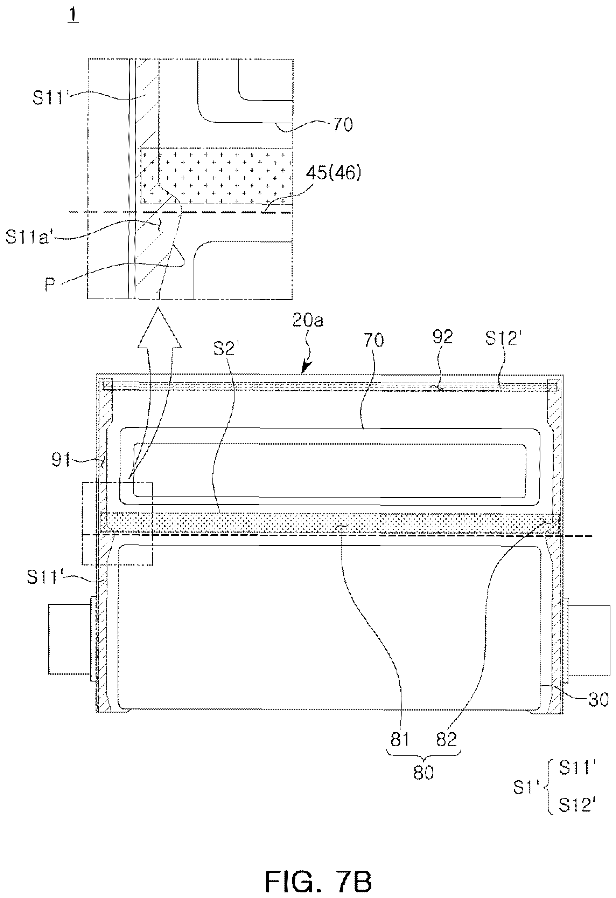

As shown in FIG. 7B and FIG. 8B, the transverse portion sealing process according to the comparative example may include a process of forming the transverse sealed portion S2'.

The transverse sealed portion S2' may be formed at the boundary portion 80 located between the electrode accommodation portion 30 and the gas accommodation portion 70. The transverse sealed portion S2' may be formed by at least partially sealing the boundary portion 80. Each of both ends of the transverse sealed portion S2' may overlap the overlapping portion S11a' of the first edge sealed portion S11'. The transverse sealed portion S2' may be formed with a constant width (or thickness) in the second direction -Z. Since the shape of the transverse sealed portion S2' according to the comparative example is substantially similar to that of the example, a detailed description thereof will be omitted.

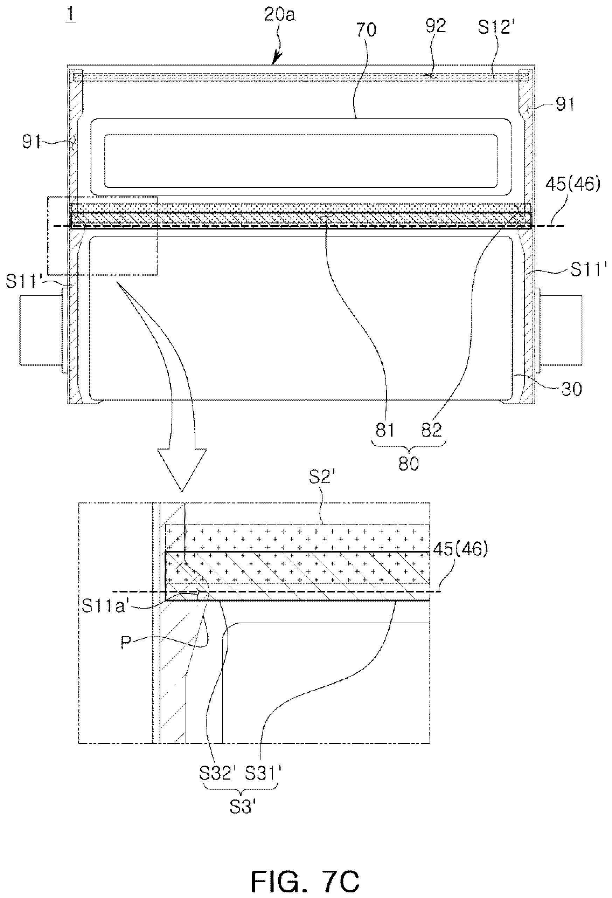

As shown in FIG. 7C and FIG. 8C, the finishing sealing process according to the comparative example may include a process of forming the exterior sealed portion S3'. The exterior sealed portion S3' may be formed by sealing the boundary portion 80 crossing between the electrode accommodation portion 30 and the gas accommodation portion 70 in the first direction Y. A portion of the exterior sealed portion S3' may overlap the transverse sealed portion S2'. The exterior sealed portion S3' may be formed in a position closer to the electrode accommodation portion 30 than the transverse sealed portion S2'.

The exterior sealed portion S3' may include the first portion S31' formed in the central region 81 of the boundary portion 80 and the second portion S32' formed in the end region 82 of the boundary portion 80. The exterior sealed portion S3' may be formed with a constant width (or thickness) in the second direction -Z. That is, the exterior sealed portion S3' may have the same value for the width of the first portion S31' and the width of the second portion S32'.

The exterior sealed portion S3' may overlap the overlapping portion S11a' of the first edge sealed portion S11'. At this time, the exterior sealed portion S3' may intersect with the protrusion P formed in the overlapping portion S11a'.

In the comparative example, the folding line used in the folding process may be located in the exterior sealed portion S3' and may extend in the first direction Y. The first folding line of the folding line may be disposed in a region in which the exterior sealed portion S3' and the first edge sealed portion S11' overlap. In particular, the protrusion P of the first edge sealed portion S11' overlaps the exterior sealed portion S3', and the first folding line passes through the region in which the protrusion P of the first edge sealed portion S11' and the exterior sealed portion S3' overlap. A point at which the first folding line intersects the overlapping sealing region is located very close to the inner boundary line of the sealing region.

Therefore, in the case of the comparative example, when the folding process is performed, the insulation breakdown of the sealed portion is likely to occur in the overlapping sealing region, and leakage of electrolyte, gas, etc. may easily occur due to the decrease in sealing force.

In contrast, in the example illustrated in FIG. 4E, since the folding line 45 is set not to pass through the overlapping sealing region, it is possible to prevent or reduce the occurrence of insulation failure, leakage, etc. of the sealed portion. In addition, in the example illustrated in FIG. 6, the point at which the folding line 45 and the overlapping sealing region intersect is disposed to be significantly spaced apart from the inner boundary line of the sealing region, the occurrence of insulation failure or leakage of the sealing region may be significantly reduced, as compared to the comparative example illustrated in FIG. 7A to FIG. 8C.

## Claims

1. A method of manufacturing a battery cell, the method comprising:
an edge sealing process of sealing at least a portion of an edge of a case to form an edge sealed portion blocking an electrode accommodation portion and a gas accommodation portion externally; and
a finishing sealing process of sealing a boundary portion crossing between the electrode accommodation portion and the gas accommodation portion in a first direction to form an exterior sealed portion,
wherein the exterior sealed portion includes a first portion formed in a central region of the boundary portion and a second portion formed in an end region of the boundary portion, and
in the finishing sealing process, an extension extending in a second direction toward the electrode accommodation portion is formed in the second portion of the exterior sealed portion.

2. The method of claim 1, wherein the extension includes a diagonal line forming a chamfer shape at a corner of the electrode accommodation portion.

3. The method of claim 1 or 2, wherein the edge sealed portion includes an overlapping portion overlapping the exterior sealed portion, and the overlapping portion has a shape not protruding toward the central region of the boundary portion, as compared to the periphery of the overlapping portion.

4. The method of claim 3, wherein
the edge sealing process includes a process of forming a first edge sealed portion formed on a lateral side of the electrode accommodation portion and the gas accommodation portion and extending in the second direction, and a process of forming a second edge sealed portion formed on a top side of the gas accommodation portion and extending in the first direction, and
the overlapping portion is formed in a portion in which the first edge sealed portion and the exterior sealed portion intersect.

5. The method of any one of claims 1 to 4, wherein the edge sealed portion includes an overlapping portion overlapping the exterior sealed portion, and the overlapping portion has a shape in which a boundary line facing the central region of the boundary portion is perpendicular to the first direction.

6. The method of any one of claims 1 to 5, further comprising a transverse portion sealing process performed between the edge sealing process and the finishing sealing process, during the transverse portion sealing process, the boundary portion is at least partially sealed in the first direction to form a transverse sealed portion.

7. The method of claim 6, wherein the transverse sealed portion is formed with a constant width in the second direction.

8. The method of claim 6, further comprising:
a cutting process of cutting the boundary portion along a cutting line to correspond to an appearance of the battery cell, the cutting process is being performed after the finishing sealing process; and
a folding process of folding a sealed portion disposed around the electrode accommodation portion,
wherein the folding process includes a process of folding the sealed portion based on a folding line, and
the folding line is located in the exterior sealed portion and is disposed in a position outside the transverse sealed portion.

9. The method of claim 8, wherein the cutting line is set to have a slope with respect to the exterior sealed portion so that the folding line does not pass through a region in which the edge sealed portion and the exterior sealed portion overlap at both ends of the folding line.

10. The method of any one of claims 1 to 9, further comprising a degassing process of discharging gas generated in the electrode accommodation portion from the electrode accommodation portion to the gas accommodation portion, the degassing process being performed between the edge sealing process and the finishing sealing process.

11. A battery cell comprising:
an electrode assembly;
a cell case including an electrode accommodation portion accommodating the electrode assembly and an electrolyte and a sealed portion sealing at least a portion of a circumference of the electrode accommodation portion; and
an electrode lead electrically connected to the electrode assembly and exposed in a first direction through a lateral side of the electrode accommodation portion,
wherein the sealed portion includes an edge sealed portion formed on a lateral side of the electrode accommodation portion in which the electrode lead is disposed and an exterior sealed portion formed on a top side of the electrode accommodation portion in which the electrode lead is not disposed,
the exterior sealed portion includes a first portion formed in a central region of the exterior sealed portion and a second portion formed in an end region of the exterior sealed portion, and
the second portion of the exterior sealed portion includes an extension extending in a second direction toward the electrode accommodation portion.

12. The battery cell of claim 11, wherein the extension includes a diagonal line forming a chamfer shape at a corner of the electrode accommodation portion.

13. The battery cell of claim 11 or 12, having one or more of the following characteristics (i) and/or (ii), respectively alone or in combination:
(i) the edge sealed portion includes an overlapping portion overlapping the exterior sealed portion, and the overlapping portion has a shape not protruding toward the central region of the exterior sealed portion, as compared to the periphery of the overlapping portion, and/or
(ii) the edge sealed portion includes an overlapping portion overlapping the exterior sealed portion, and a boundary line of the overlapping portion facing the first portion of the exterior sealed portion has a shape perpendicular to the first direction.

14. The battery cell of any one of claims 11 to 13, wherein
the sealed portion is formed on three open sides among four sides located around the electrode accommodation portion,
the edge sealed portion is formed on each of both lateral sides of the electrode accommodation portion, and
the electrode lead is disposed on each of both lateral sides of the electrode accommodation portion.

15. The battery cell of any one of claims 11 to 14, wherein
the exterior sealed portion is folded based on a folding line extending in the first direction to form a folded portion, and
the folding line is configured not to pass through a region in which the edge sealed portion and the exterior sealed portion overlap.
